# EUROPÄISCHE PATENTSCHRIFT

(11) **EP 0 569 673 B1**
(45) Veröffentlichungstag und Bekanntmachung des Hinweises auf die Patenterteilung: **23.10.1996**
(21) Anmeldenummer: 93103456.5
(22) Anmeldetag: 04.03.1993
(51) Int. Cl.: H01L 41/09

(54) **Ultraschallwanderwellenmotor mit formschlüssiger Anregung von Wanderwellen**
Ultrasonic travelling wave motor driven by tight-fitted actuators
Moteur ultrasonique à ondes progressives entraîné par des organes d'actionnement attachés par liaison de forme

(30) Priorität: 15.05.1992 DE 4216050
(43) Veröffentlichungstag der Anmeldung: 18.11.1993
(73) Patentinhaber: Daimler-Benz Aktiengesellschaft, 70546 Stuttgart (DE)
(72) Erfinder: Schöner, Hans-Peter, Dr.-Ing., W-6101 Modautal 3 (DE); Wallaschek, Jörg, Prof. Dr.-Ing., W-4790 Paderborn (DE)
(74) Vertreter: Vogl, Leo, Dipl.-Ing.

(56) Entgegenhaltungen:
- PATENT ABSTRACTS OF JAPAN vol. 14, no. 255 (E-935) 31. Mai 1990 & JP-A-20 74 172

## Beschreibung

Die vorliegende Erfindung betrifft einen Ultraschallmotor, bei dem ein Antriebsmoment mit Hilfe eines Ultraschalloszillators, z. B. eines Piezoelektrikums oder eines Magnetostriktionselementes erzeugt wird. Ein solcher Ultraschallmotor, wie er z.B. aus dem US-Patent 4,562,374 bekannt ist, besteht aus einem Rotor und einem Stator aus elastischem Material, wobei in letzterem durch Ultraschalloszillatoren mechanische Wellen angeregt werden. Rotor und Stator stehen unter axialem Druck im Bereich einer Kontaktfläche in Kontakt, die mit einem geeigneten Reibbelag versehen ist. Vorteile solcher Motoren sind unter anderem die Möglichkeit, ohne Getriebe hohe Drehmomente bei anwenderfreundlichen niedrigen Drehzahlen zu erzeugen, ihr kleines Bauvolumen mit geringem Gewicht und hoher Energiedichte sowie ein hohes Haltemoment im passiven Zustand.

Das in einem piezoelektrischen Wanderwellenmotor verwendete Antriebskonzept wird in einem Artikel in JEE (June 1986, P.66 - 70) dargestellt. Danach enthält der in einem solchen Motor verwendete Schwingstator eine kreisringförmige Piezokeramikscheibe, die mit Elektroden versehen und mit dem eigentlichen Schwingkörper verklebt ist. Zwei Arbeitselektroden zur einen Seite der Piezokeramik bilden mit einem metallischen Schwingkörper, der zur anderen Seite der Piezokeramik als Gegenelektrode wirkt, zwei getrennte Anregesysteme. Unter jeder der Arbeitselektroden befinden sind in der Keramik wechselweise unterschiedlich polarisierte Bereiche, die im weitestem Sinne mit der Polteilung konventioneller Motore vergleichbar sind.

Der eigentliche Schwingkörper ist als Metallring oder als kreisförmige Metallscheibe ausgebildet. Die Schwingungsanregung erfolgt über den umgekehrten piezoelektrischen Effekt, wonach beim Anlegen einer elektrischen Spannung in polaren Ionenkristallen der Kristall eine Formänderung erfährt. Über die Arbeitselektroden wird die Piezokeramik mit hochfrequenter Wechselspannung so angeregt, daß im Stator mechanische Wanderwellen erzeugt werden. Die Oberflächenelemente des Stators in der Kontaktfläche mit dem Rotor bewegen sich dabei näherungsweise auf elliptischen Bahnen, so daß aufgrund der Reibung zwischen Stator und Rotoroberfläche in der Kontaktzone zwischen den beiden Oberflächen tangentiale Kräfte entstehen, die zur Ausbildung einer Rotorbewegung führen.

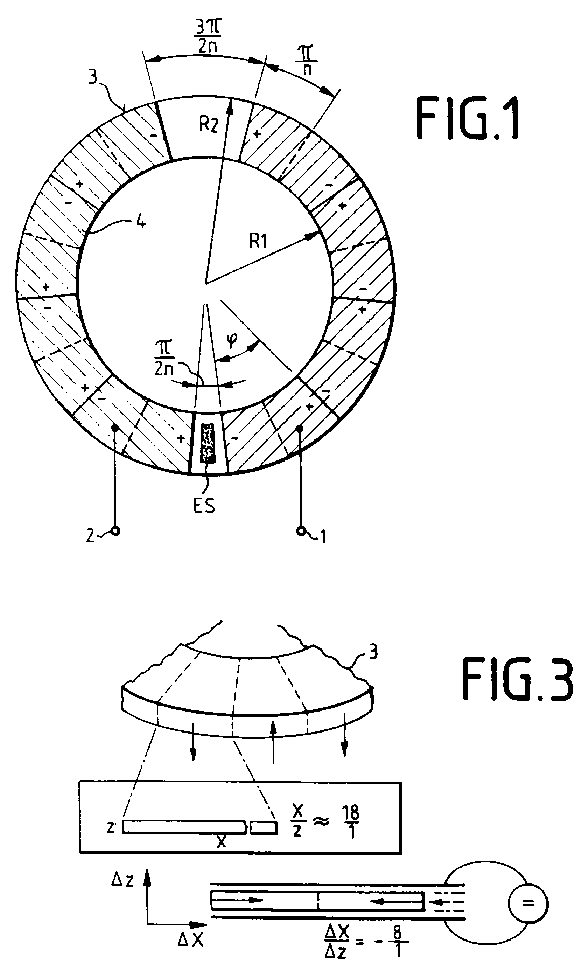

Die Fig. 1 und 2 zeigen in einer schematischen Darstellung einen Schwingstator für einen piezoelektrischen Rotationsmotor mit den Arbeitselektroden 1 bzw. 2 unter den jeweils positiv bzw. negativ polarisierte Bereiche in der piezoelektrischen Keramik mit jeweils einem Winkelbereich von 1/9 _{π} angeordnet sind. In den von der Piezokeramik freien Winkelbereichen sind zur sensorischen Erfassung des Motorzustandes Sensorelektroden ES angeordnet.

In Fig. 2 ist die aus dem Stand der Technik bekannte Anordnung der Piezokeramik 3 zwischen den Arbeitselektronen 1, 2 und der durch den metallischen Schwingkörper 4 gebildeten Gegenelektrode illustriert. Die für die Erzeugung von Wanderwellen im passiven eigentlichen Schwingkörper 4 erforderliche Kopplung zwischen Schwingkörper 4 und Piezokeramik 3 erfolgt dabei kraftschlüssig durch eine Klebeverbindung 3a an der Kontaktfläche zwischen Schwingkörper und Keramik.

Fig. 3 zeigt schematisch ein scheibenförmiges Piezokeramiksegment mit einer Scheibendicke z und linearer Ausdehnung X, wobei z klein gegenüber X ist. Bei Anlage eines elektrischen Feldes senkrecht zur Scheibenoberfläche findet man, daß die piezoelektrische Deformation senkrecht zur Feldrichtung, d. h. in X-Richtung, um eine Größenordnung größer ist als parallel zur Feldrichtung, d.h. in z-Richtung. Bei einem Kreisringsegment führt dies dazu, daß die Deformation der Piezokeramik näherungsweise ausschließlich in Umfangsrichtung erfolgt.

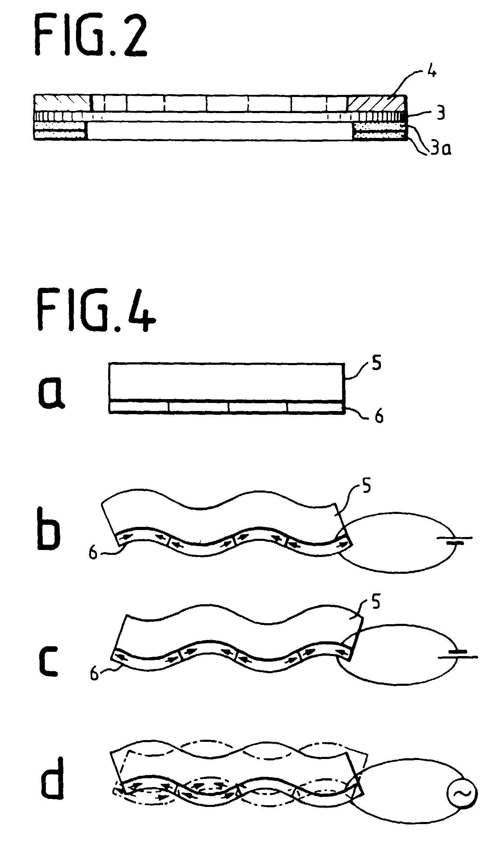

Fig. 4a zeigt die schematische Darstellung eines Schwingstators, bestehend aus einem elastischen Schwingkörper 5 und einer mit diesem verklebten symmetrisch polarisierten Piezokeramik 6.

In Fig. 4b ist gezeigt, wie sich bei Anlage eines statischen elektrischen Feldes wegen der kraftschlüssigen Verbindung zwischen Piezokeramik 6 und elastischem Körper 5, in der Oberfläche des letzteren Wellenberge und Wellentäler ausbilden.

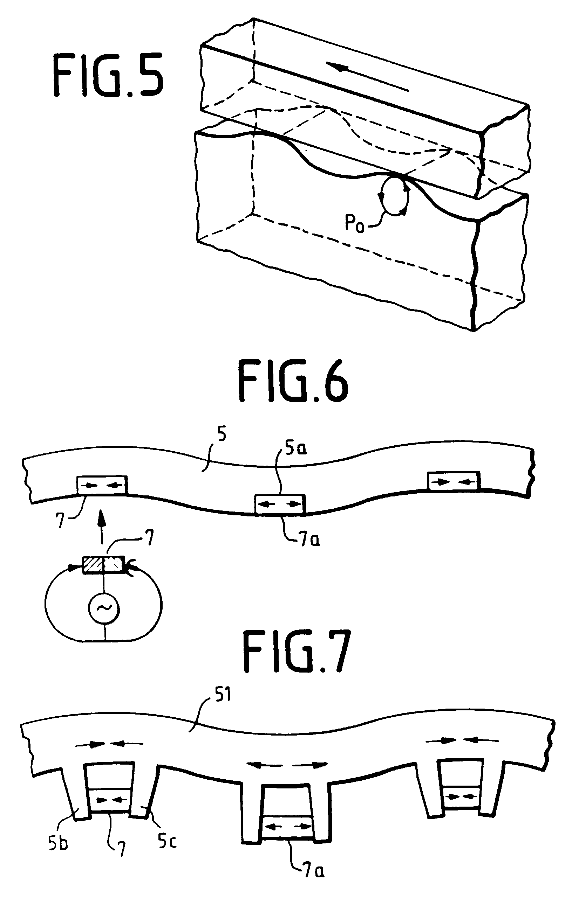

Eine Umkehrung der Polarität des elektrischen Feldes führt, wie in Fig. 4c gezeigt, zu einer Invertierung von Wellentälern und Wellenbergen. Legt man eine sinusförmige Wechselspannung an, führt jedes Piezokeramiksegment mit der Periode der Wechselspannung Kontraktionen und Dehnungen aus, so daß sich stehende Wellen im Schwingstator ausbilden (Fig. 4d). Durch Überlagerung von zwei um 90° phasenverschobenen stehenden Wellen können Wanderwellen im Schwingstator angeregt werden. Die Bewegung eines Oberflächenpunktes Pₒ des Schwingstators erfolgt dabei entlang einer elliptischen Bahn, die entgegengesetzt zur Ausbreitungsrichtung der Wanderwelle durchlaufen wird, wobei ein Ellipsenumlauf der Periodenzeit der elektrischen Anregung entspricht (Fig. 5).

Die kraftschlüssige Kopplung zwischen anregender Piezokeramik und angeregtem Schwingkörper durch eine Klebeschicht weist einige Nachteile auf. Insbesondere werden die Eigenschaften des Motors in schwer zu kontrollierender Weise durch die Güte der Klebeschicht bzw. durch die durch die Klebeschicht verursachten Übertragungsverluste beinflußt. Die Kopplung zwischen Piezokeramik und Schwingkörper ist durch die unterschiedlichen Temperaturausdehnungs-Koeffizienten von Piezokeramik und Schwingkörper sowie durch die Klebeeigenschaften temperaturabhängig. Da die Piezokeramik sehr empfindlich auf Dehnung reagiert, muß, um einen Bruch der Piezokeramik zu vermeiden, für eine ausreichende mechanische Vorspannung gesorgt werden, durch die die maximale Schwingungsamplitude der Keramik definiert wird. Hierzu wird die Keramik bei hoher Temperatur auf den Schwingkörper geklebt. Trotz einer thermischen Vorspannung besteht jedoch die Gefahr von Brüchen, da mit wachsender Betriebstemperatur die Vorspannung reduziert wird.

Der vorliegenden Erfindung liegt die Aufgabe zugrunde, einen Ultraschallmotor zu schaffen, bei dem insbesondere die oben erwähnten Probleme der Kopplung zwischen Ultraschalloszillatoren und Schwingkörper vermieden werden. Nach Anspruch 1 wird die Aufgabe erfindungsgemäß dadurch gelöst, daß die Ultraschalloszillatoren formschlüssig durch Klemmkräfte an den Schwingkörper gehalten werden. Der erfindungsgemäße Motor weist gegenüber dem Stand der Technik u.a. folgende Vorteile auf:

Mit dem Wegfall der Klebeschicht zwischen Ultraschalloszillatoren und Schwingkörper entfallen damit verbundene Übertragungsverluste; die formschlüssige Kopplung zwischen Ultraschalloszillatoren und Schwingkörper ermöglicht eine höhere Vorspannung und damit eine höhere Belastbarkeit und Ausnutzung des Leistungsvermögens der Piezokeramik. Fertigungstechnisch ergibt sich der Vorteil, daß die Arbeitsgänge Polarisieren und Kleben der Keramik entfallen können. Darüber hinaus könenn bei dem erfindungsgemäßen Motor zur Schwingungsanregung in einfacher Weise piezoelektrische Linearelemente verwendet werden, d. h. solche Oszillatoren, bei denen die Ausdehnung bzw. Kontraktion hauptsächlich entlang der Polarisationsrichtung erfolgt. Gegenüber den herkömmlicherweise verwendeten Keramikringen, die bei Beschädigung als Ganze ersetzt werden müssten, haben formschlüssig eingesetzte Linearelemente den Vorteil, einzeln leicht ausgetauscht werden zu können.

Vorteilhafte Ausgestaltung der Erfindung sind in den Unteransprüchen angegeben. Für den Fachmann ist es ersichtlich, daß neben piezokeramischen, auch elektro- oder magnetostriktive und andere in ihrer Dehnung steuerbare Materialien in dem erfindungsgemäßen Ultraschallmotor zur Schwingungsanregung verwendet werden können. Der erfindungsgemäße Motor kann als Linear- und als Scheiben- oder Kreisringmotor ausgestaltet werden.

Die Erfindung wird nachstehend an Hand von Ausführungsbeispielen unter Bezugnahme auf die Figuren 1 bis 10 näher erläutert:
- Fig. 1: zeigt die Konfiguration der Piezokeramik für den Stator eines Ultraschallmotors,
- Fig. 2: Zeigt den Querschnitt durch den Schwingstator eines Ultraschallmotors,
- Fig. 3: zeigt die Deformation eines piezoelektrischen Kreisringsegments bei Anlage eines elektrischen Feldes,
- Fig. 4: zeigt die Anregung von stehenden Wellen in einer Piezokeramik,
- Fig. 5: zeigt die elliptische Bewegung eines Oberflächenpunktes bei Anregung einer Wanderwelle im Schwingkörper,
- Fig. 6: zeigt ein erstes Ausführungsbeispiel eines erfindungsgemäßen Ultraschallmotors,
- Fig. 7: zeigt eine Abwandlung des Motors gem. Fig. 6,
- Fig. 8: zeigt ein zweites Ausführungsbeispiels eines erfindungsgemäßen Ultraschallmotors,
- Fig. 9: zeigen weitere Ausführungsbeipiele eines erfindungsgemäßen Ultraschallmotors,
- Fig. 10: zeigt ein viertes Ausführungsbeispiel eines erfindungsgemäßen Ultraschallmotors.

Die Figur 6 zeigt eine schematische Seitenansicht eines ersten Ausführungsbeispiels des erfindungsgemäßen Ultraschallmotors. Zur Vereinfachung sind der Rotor sowie die zur Halterung des Stators verwendeten Mittel nicht dargestellt.
Mit 5 ist eine Schwingplatte bezeichnet, mit Schlitzen o. ä. 5a, zur Aufnahme von piezokeramischen Ultraschalloszillatoren 7, 7a. Die Piezokeramik 7, 7a wird unter mechanischer Vorspannung, z. B. durch Stellschrauben, Keile, Einschrumpfen oder ähnliches an die Schwingplatte 5 gehalten. Der Einbau der Oszillatoren erfolgt bezüglich der in der Schwingplatte erzeugten Wanderwelle vorzugsweise an einer Stelle maximaler Schwingungsamplitude der Stehwellen. Das Oszillatorelement 7 besteht aus zwei unterschiedlich polarisierten Piezokeramikzylindern, die über eine Mittelelektrode und zwei an den Zylinderstirnseiten angeordneten Gegenelektroden angesteuert werden. Als Gegenelektrode kann auch die metallische Schwingplatte verwendet werden. Die Pfeile bei den Piezokeramiken deuten Dehnungs- bzw. Kontraktionszustände an. Bei dem Ausführungsbeispiel dieser Figur sind als Ultraschalloszillatoren piezokeramische Linearelemente gewählt worden, d. h. solche bei denen die Hauptausdehnung der Keramik entlang der Polarisationsrichtung erfolgt. Jedoch ist es auch möglich piezokeramische Oszillatoren zu verwenden, bei denen die Hauptausdehnungsrichtung senkrecht zur Polarisationsrichtung liegt. In diesem Fall liegen die Arbeitselektroden i. w. parallel zur Schwingplatte. Ebenso können magneto- oder elektrostriktive Elemente verwendet werden. Außerdem kann mit Hilfe eines elastischen mechanischen Koppelgliedes eine Impedanzanpassung vorgenommen werden. Außerdem kann mit Hilfe eines elastischen mechanischen Koppelgliedes eine Impedanzanpassung vorgenommen werden.

Bei Anlage eines elektrischen Feldes an die Piezoelemente 7, 7a, ergibt sich eine Dehnung bzw. Kontraktion, abhängig von der Richtung des elektrischen Feldes gegenüber der Polarisationsrichtung der Piezokeramik. Dies führt aufgrund der formschlüssigen Verbindung zwischen den Piezokeramiken und der Schwingplatte 5 zu entsprechenden Deformationen in der Schwingplatte 5. Bei Anregung mit Wechselspannung lassen sich so Biegeschwingungen in der Schwingplatte 5 erzeugen, deren phasenrichtige Überlagerung zu den gewünschten Wanderwellen führt.

Fig. 7 zeigt eine Abwandlung des Ausführungsbeispiels aus Fig. 6. Die formschlüssige Verbindung zwischen Ultraschallanregeelementen 7, 7a und der Schwingplatte 51 erfolgt hier durch an der Schwingplatte 5 befestigte Vorsprünge 5b, 5c, die als Hebelarme wirken. Ebenso wie bei dem Ausführungsbeispiel in Fig. 6 werden die Piezoelemente durch Klemmkräfte an den Schwingkörper gehalten, die z. B. durch Stellschrauben oder auch eine Presspassung erzeugt werden. Aus der Figur 7 ist ersichtlich, daß Dehnungen bzw. Kontraktionen der Piezoelemente über die Hebel Kontraktion bzw. Dehnungen in einem Gebiet der Schwingplatte 5 zwischen den Hebeln erzeugt. Hiermit wiederum können Biege- und Wanderwellen in der Schwingplatte 5 angeregt werden.

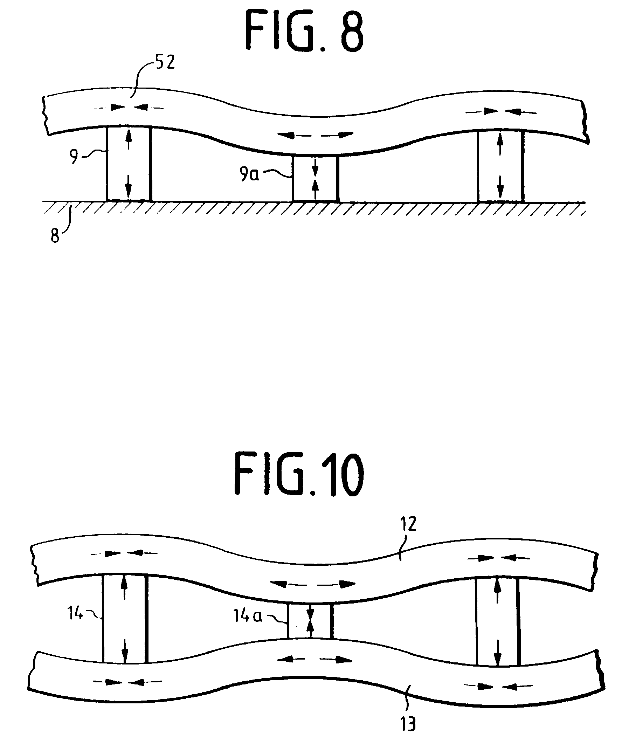

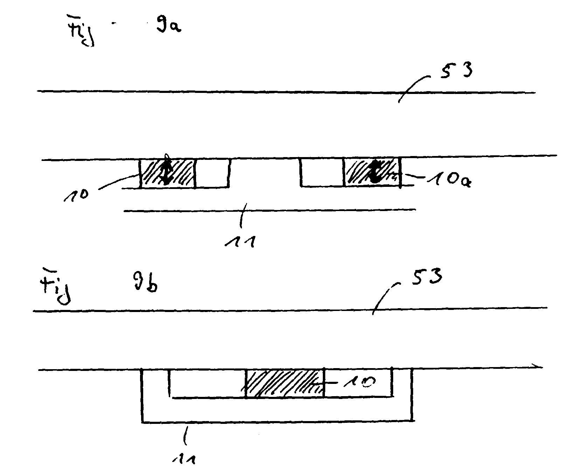

Figur 8 zeigt die Seitenansicht eines zweiten Ausführungsbeispiel des erfindungsgemäßen Ultraschallmotors. Zwischen einer Schwingplatte 52 und einem festen Widerlager 8 sind Ultraschalloszillatoren 9, 9a angeordnet. Schwingplatte 52 und Widerlager 8 werden dabei unter Druck aneinander gehalten. Bei Anlage eines elektrischen Feldes (über Elektroden, die in der Fig. 8 nicht dargestellt sind) führen die Elemente 9, 9a Dehnungen bzw. Kontraktionen senkrecht zur Oberfläche des festen Widerlagers 8 aus. Die Schwingplatte 52 folgt bei Anregung mit ihrer Resonanzfrequenz diesen Bewegungen lokal und führt eine Biegebewegung gegenüber der Gleichgewichtslage aus. So führt z. B. die in Fig. 8 gezeigte Dehnung des Elements 9 in einem an der Kontaktfläche mit der Schwingplatte 52 benachbarten Gebiet zu Kontraktionen, während die Kontraktion des Elements 9a zu einer Dehnung in einem entsprechenden Gebiet der Schwingplatte 52 führt. Auf diese Weise ist es möglich, in der Schwingplatte 52 die Biege- und Wanderwellen anzuregen.

Figuren 9 zeigen weitere Ausführungsbeispiele des erfindungsgemäßen Ultraschallmotors. Hier sind die Ultraschallanregelemente 10, 10a zwischen der Schwingplatte 53 und lokalen T- bzw. U-förmigen Widerlagern (11) unter Vorspannung angeordnet. Die Anregung von Biegewellen erfolgt ähnlich wie bei dem Ausführungsbeispiel von Fig. 8, durch zur Oberfläche der Schwingplatte 53 im Gleichgewichtszustand senkrechte Dehnungen bzw. Kontraktionen der Linearelemente 10, 10a.

Figur 10 zeigt ein weiteres Ausführungsbeispiel eines erfindungsgemäßen Ultraschallmotors. Hierbei sind unter Druck zwischen den beiden Schwingplatten 12 und 13 Ultraschallanregeelemente 14, 14a angeordnet. Die Anregung von Biegewellen in den Platten 12 und 13 erfolgt durch senkrecht zu ihrer Oberfläche stattfindende Dehnungs- bzw. Kontraktionsbewegungen der Oszillationselemente 14, 14a. Die Anregung erfolgt vorzugsweise in beiden Schwingkörpern 12, 13 symmetrisch, so daß gegenüberliegende Oberflächenelemente der elastischen Körper 12, 13 spiegelsymmetrische Bewegungen ausführen. Man erhält daher in beiden Schwingplatten 12, 13 gleichsinnig nutzbare Biegeschwingungen, die zum Antrieb von zwei koplanar angeordneten Rotoren verwendet werden können.

## Patentansprüche

1. Ultraschallmotor mit einem Schwingkörper aus einem elastischen Material, der mindestens zwei Ultraschallanregeelemente (7, 7a, 9, 9a, 14, 14a) zur Anregung von akustischen Wanderwellen in dem Schwingkörper (5) sowie einen Rotor aufweist, der unter Druck in Reibkontakt mit einem Oberflächenbereich des Schwingkörpers (5) steht, **dadurch gekennzeichnet**, daß die Ultraschallanregeelemente (7, 7a, 9, 9a, 14, 14a) formschlüssig allein durch Klemmkräfte an den Schwingkörper (5) gehalten werden.

2. Ultraschallmotor nach Anspruch 1, dadurch gekennzeichnet, daß als Ultraschallanregeelemente piezokeramische Linearelemente (7, 7a, 9, 9a, 10, 10a, 14, 14a) verwendet werden, bei denen die Richtung des angelegten elektrischen Feldes gleich der Hauptrichtung der Dehnungen bzw. Kontraktionen des Elements ist.

3. Ultraschallmotor nach Anspruch 1 oder 2, dadurch gekennzeichnet daß Linearelemente (7, 7a, 9, 9a, 10, 10a, 14, 14a) verwendet werden, deren Anregevermögen durch Kopplung mit elastischen Elementen vergrößert wird (Impedanzanpassung).

4. Ultraschallmotor nach einem der Ansprüche 1 bis 3, dadurch gekennzeichnet, daß jeweils zwei gegensinnig polarisierte Linearelemente (7, 7a, 9, 9a, 10, 10a, 14, 14a) zusammengefaßt und durch eine gemeinsame Mittelelektrode angesteuert werden.

5. Ultraschallmotor nach Ansprüchen 1 bis 4, dadurch gekennzeichnet, daß im Schwingkörper (5) Schlitze (5a) zur Aufnahme der Ultraschallanregeelemente (7, 7a) vorgesehen sind.

6. Ultraschallmotor nach Ansprüchen 1 bis 5, dadurch gekennzeichnet, daß am Schwingkörper (51) Vorsprünge (5b, 5c) vorgesehen sind, zwischen denen die Ultraschallanregeelemente (7, 7a) formschlüssig durch Klemmkräfte gehalten werden.

7. Ultraschallmotor nach Ansprüchen 1 bis 5, dadurch gekennzeichnet, daß ein festes Widerlager (8) vorgesehen ist und daß Ultraschallanregeelemente (9, 9a) unter Druck zwischen dem Schwingkörper (52) und dem Widerlager (8) angeordnet sind.

8. Ultraschallmotor nach Ansprüchen 1 bis 4, dadurch gekennzeichnet, daß lokale T-förmige Widerlager (11) vorgesehen sind und daß die Ultraschallanregeelemente (10) unter Druck zwischen dem Schwingkörper (5) und den Gegenmassen (11) angeordnet sind.

9. Ultraschallmotor nach den Ansprüchen 1 bis 4, dadurch gekennzeichnet, daß lokale U-förmige Widerlager (11) vorgesehen sind und daß die Ultraschallanregeelemente (10, 10a) unter Druck zwischen dem Schwingkörper (53) und den Widerlagern (11) angeordnet sind.

10. Ultraschallmotor nach Anspruch 1, dadurch gekennzeichnet, daß Ultraschallanregeelemente (14, 14a) zwischen zwei bei gleicher Resonanzfrequenz schwingenden Schwingkörpern (12, 13) angeordnet sind.

## Claims

1. Ultrasonic motor with an oscillatory body of a resilient material, with at least two ultrasonic excitation elements (7, 7a, 9, 9a, 14, 14a) for excitation of acoustic travelling waves in the oscillatory body (5) as well as a rotor, which stands under pressure in frictional contact with a surface region of the oscillatory body (5), characterised thereby that the ultrasonic excitation elements (7, 7a, 9, 9a, 14, 14a) are held shape-lockingly at the oscillatory body (5) solely by clamping forces.

2. Ultrasonic motor according to claim 1, characterised thereby that piezoceramic linear elements (7, 7a, 9, 9a, 10, 10a, 14, 14a), in which the direction of the applied electric field is the same as the principal direction of the expansions or contractions of the element, are used as ultrasonic excitation elements.

3. Ultrasonic motor according to claim 1 or claim 2, characterised thereby that linear elements (7, 7a, 9, 9a, 10, 10a, 14, 14a), the excitation capability of which is increased by coupling with resilient elements (impedance matching), are used.

4. Ultrasonic motor according to one of claims 1 to 3, characterised thereby that each time two oppositely poled linear elements (7, 7a, 9, 9a, 10, 10a, 14, 14a) are combined and are controlled by a common centre electrode.

5. Ultrasonic motor according to one of claims 1 to 4, characterised thereby that slots (5a) for reception of the ultrasonic excitation elements (7, 7a) are provided in the oscillatory body (5).

6. Ultrasonic motor according to one of claims 1 to 5, characterised thereby that projections (5b, 5c), between which the ultrasonic excitation elements (7, 7a) are shape-lockingly held by clamping forces, are provided at the oscillatory body (51).

7. Ultrasonic motor according to one of claims 1 to 5, characterised thereby that a fixed counterbearing (8) is provided and that ultrasonic excitation elements (9, 9a) are arranged under pressure between the oscillatory body (52) and the counterbearing (8).

8. Ultrasonic motor according to one of claims 1 to 4, characterised thereby that local T-shaped counterbearings (11) are provided and that the ultrasonic excitation elements (10) are arranged under pressure between the oscillatory body (5) and the counter mass (11).

9. Ultrasonic motor according to one of claims 1 to 4, characterised thereby, that local T-shaped counterbearings (11) are provided and that the ultrasonic excitation elements (10) are arranged under pressure between the oscillatory body (5) and the counterbearings (11).

10. Ultrasonic motor according to claim 1, characterised thereby that the ultrasonic excitation elements (14, 14a) are arranged between two oscillatory bodies (12, 13) oscillating at like resonance frequencies.

## Revendications

1. Moteur à ultrasons comprenant un corps oscillant en matériau élastique, qui comprend au moins deux éléments d'excitation d'ultrasons (7, 7a, 9, 9a, 14, 14a) pour exciter des ondes de propagation acoustiques dans le corps oscillant (5), et qui comprend un rotor, lequel se trouve en contact de friction sous pression avec une zone de surface du corps oscillant (5), caractérisé en ce que les éléments d'excitation d'ultrasons (7, 7a, 9, 9a, 14, 14a) sont maintenus en coopération de formes sur le corps oscillant (5) uniquement par des forces de serrage.

2. Moteur à ultrasons selon la revendication 1, caractérisé en ce qu'on utilise comme éléments d'excitation d'ultrasons des éléments linéaires piézo-céramiques (7, 7a, 9, 9a, 10, 10a, 14, 14a), dans lesquels la direction du champ électrique appliqué est égale à la direction principale des extensions et/ou contractions de l'élément.

3. Moteur à ultrasons selon l'une ou l'autre des revendications 1 et 2, caractérisé en ce qu'on utilise des éléments linéaires (7, 7a, 9, 9a, 10, 10a, 14, 14a) dont la capacité d'excitation est augmentée par couplage avec des éléments élastiques (adaptation d'impédance).

4. Moteur à ultrasons selon l'une quelconque des revendications 1 à 3, caractérisé en ce que deux éléments linéaires respectifs polarisés en sens opposés (9, 7, 7a, 9, 9a, 10, 10a, 14, 14a) sont groupés et pilotés par une électrode médiane commune.

5. Moteur à ultrasons selon l'une quelconque des revendications 1 à 4, caractérisé en ce que l'on prévoit dans le corps oscillant (5) des fentes (5a) pour recevoir les éléments d'excitation d'ultrasons (7, 7a).

6. Moteur à ultrasons selon l'une quelconque des revendications 1 à 5, caractérisé en ce que l'on prévoit sur le corps oscillant (51) des saillies (5b, 5c), entre lesquelles les éléments d'excitation d'ultrasons (7, 7a) sont maintenus en coopération de formes par des forces de serrage.

7. Moteur à ultrasons selon l'une quelconque des revendications 1 à 5, caractérisé en ce que l'on prévoit un appui (8) fixe, et en ce que des éléments d'excitation d'ultrasons (9, 9a) sont agencés sous pression entre le corps oscillant (52) et les appuis (8).

8. Moteur à ultrasons selon l'une quelconque des revendications 1 à 4, caractérisé en ce que l'on prévoit des appuis locaux (11) en forme de T, et en ce que les éléments d'excitation d'ultrasons (10) sont agencés sous pression entre le corps oscillant (5) et les contre-masses (11).

9. Moteur à ultrasons selon l'une quelconque des revendications 1 à 4, caractérisé en ce que l'on prévoit des appuis locaux (11) en forme de U, et en ce que les éléments d'excitation d'ultrasons (10, 10a) sont agencés sous pression entre le corps oscillant (53) et les appuis (11).

10. Moteur à ultrasons selon la revendication 1, caractérisé en ce que des éléments d'excitation d'ultrasons (14, 14a) sont agencés entre deux corps oscillants (12, 13) qui oscillent à la même fréquence de résonance.
